# EUROPÄISCHE PATENTANMELDUNG

(11) **EP 3 906 826 A1**
(43) Veröffentlichungstag der Anmeldung: **10.11.2021**
(21) Anmeldenummer: 20000176.6
(22) Anmeldetag: 07.05.2020
(51) Int. Cl.: A47J 47/00

(54) **SCHNEIDEEINRICHTUNG FÜR HÄUSLICHE UND/ODER GASTRONOMISCHE ZWECKE**

(71) Anmelder: LENSER Filtration GmbH, 89250 Senden (DE)
(72) Erfinder: BÖRSTE, Georg, 83071 Stephanskirchen (DE); NORDHOFF, Simon Martin, 89077 Ulm (DE)
(74) Vertreter: Dziewior, Joachim

(57) **Zusammenfassung**

Die Schneideeinrichtung dient für häusliche und/oder gastronomische Zwecke und besteht aus einem Schneidebrett mit einer Kunststoffplatte (1), die mit einem oder mehreren, im Inneren liegenden Kanälen (2) versehen ist. Diese können mit einem fluiden oder gasförmigen Medien zur Kühlung oder Erwärmung gespeist werden. Dazu ist eine Kühl- oder Heizeinrichtung vorgesehen, die an die Kanäle (2) des Schneidbretts anschließbar ist und diese mit dem Medium speist.

## Beschreibung

Die Erfindung betrifft eine Schneideeinrichtung für häusliche und/oder gastronomische Zwecke, bestehend aus einem Schneidebrett aus einer Kunststoffplatte.

Derartige Schneideeinrichtungen sind sowohl aus der Praxis bekannt als auch druckschriftlich vorbeschrieben worden. Insbesondere sind auch Warmhalteplatten bekannt, die bedarfsweise auch zum Zerteilen der darauf abgelegten Produkte geeignet sind.

Häufig ist es jedoch wünschenwert, Lebensmittel außerhalb hierfür speziell eingerichteter Kühleinrichtungen gekühlt zu halten, insbesondere vor und bei der Zubereitung dieser Lebensmittel. Dies trifft vor allem für die Verarbeitung von Fisch und Fleisch zu, da sich sonst Mikroben und Bakterien in nicht hinnehmbarem Maße vermehren können. Aber auch Produkte, die in schon zubereitetem Zustand, wie etwa Dessert, gelagert werden sollen, bedürfen einer Kühlung, wofür jedoch schrankartige Kühleinrichtungen meist zu aufwändig sind.

Der Erfindung liegt daher die Aufgabe zugrunde, eine Schneideeinrichtung der eingangs genannten Art zu schaffen bzw. so zu verbessern, dass sie einfach und schnell zu handhaben, leicht zu reinigen und vielseitig einsetzbar ist.

Eine diese Aufgabe lösende Schneideeinrichtung ist gekennzeichnet durch eine Kunststoffplatte, die mit einem oder mehreren, im Inneren liegenden Kanälen versehen ist, welche mit einem fluiden oder gasförmigen Medium zur Kühlung oder Erwärmung gespeist werden können, sowie aus einer Kühl- oder Heizeinrichtung, die an die Kanäle des Schneidebretts anschließbar ist und diese mit dem Medium speist.

Der durch die Erfindung erreichte Vorteil besteht im wesentlichen darin, dass die Kunststoffplatte sowohl der Kühlung als auch der Erwärmung dienen kann, wobei die Kunststoffplatte materialbedingt einfach gereinigt werden kann, zumal die Kühl- oder Heizeinrichtung von der Kunststoffplatte getrennt angeordnet ist.

In bevorzugter Ausführungsform der Erfindung ist vorgesehen, dass die Kunststoffplatte aus lebensmittelechtem Kunststoff besteht, insbesondere aus Polypropylen oder Hart-Polyethylen. So kann beispielsweise Hart-Polyethylen in Temperaturbereichen von -40 bis 110°C eingesetzt werden. Daher ist es unter anderem auch für die Verpackung von Lebensmitteln, Chemikalien oder Kosmetika sehr beliebt.

Nach einer ersten Ausgestaltung der Erfindung kann für die Kühlung bis knapp oberhalb 0°C bzw. für die Erwärmung als Medium Wasser vorgesehen sein, was den Vorteil hat, in jedem Fall bei der Verarbeitung von Lebenmitteln unbedenklich zu sein.

Alternativ besteht jedoch auch die Möglichkeit, als Medium für die Kühlung eine lebensmittelechte organische Substanz wie Propylenglykol oder dergleichen vorzusehen.

Um einen möglichst einfach zu handhabenden Anschluß der Kunststoffplatte an die Kühl- oder Heizeinrichtung zu erreichen, ist in vorteilhafter Ausgestaltung vorgesehen, dass die Kanäle endseitig mit Anschlußelementen zur Verbindung mit der Kühl- oder Heizeinrichtung versehen sind.

Als günstig hat es sich hierbei erwiesen, wenn die Anschlusselemente mit tropfdichten Schnellkupplungen versehen sind, da hierdurch ein schnelles An- und Abkoppeln der Kühl- oder Heizeinrichtung sichergestellt ist.

Um die Gefahr von Verletzungen zu verringern und die Reinigung der Kunststoffplatte zu erleichtern, wird vorgeschlagen, dass die Anschlusselemente bündig mit der Seitenfläche der Kunststoffplatte abschließen.

Je nach Anwendungs- und Einsatzzweck kann als das Medium bereitstellende Kühleinrichtung ein kleines, nur der Versorgung der Kunststoffplatte dienendes Kühlaggregat oder eine zentrale Kühleinheit vorgesehen sein.

Um die Kunststoffplatte beidseitig einsetzen zu können, hat es sich im Rahmen der Erfindung als vorteilhaft erwiesen, wenn die Kanäle etwa mittig bezüglich der Schneideflächen in der Kunststoffplatte angeordnet sind. Dadurch ist es möglich, durch Wenden des Schneidebretts eine Verdopplung der Nutzungsdauer zu erreichen. Denkbar ist jedoch auch eine dem gegenüber etwas unsymmetrische, also außermittige Anordnung der Kanäle, wenn beispielsweise eine geringere bzw. größere thermische Trägheit gegenüber Temperaturänderungen gewünscht ist.

Um eine über die Fläche gesehen gleichmäßige Temperatur zur erreichen, ist es vorteilhaft, wenn die Kanäle in einer mäanderförmigen, gleichmäßig beabstandenen Anordnung verlaufen.

Um des weiteren insbesondere die Reinigung zu erleichern, sollte die Kunststoffplatte möglichst wenig Ecken aufweisen. Daher ist es günstig, wenn die Kunststoffplatte vorzugweise rechteckige Gestalt aufweist.

Um die Einsatzmöglichkeiten des Schneidebretts möglichst breit zu gestalten, wird weiter vorgeschlagen, dass die Kunststoffplatte mit Verbindungselementen zur Anbringung an oder in Anbauteilen wie beispielsweise einem umschließenden Rahmen versehen ist. So können zusätzliche, der Speisenzubereitung dienende Hilfsmittel wie z.B. eine Portionierhilfe leicht und im Gebrauch sicher an das Schneidebrett angeschlossen werden.

Hierfür gibt es vielfältige Ausgestaltungsmöglichkeiten; eine besonders einfache und schnell zu handhabende Möglichkeit besteht darin, dass die Verbindungselemente von Magneten gebildet sind.

Schließlich kann es vorteilhaft, evt. gemäß gesetzlicher Bestimmungen auch notwendig sein, dass die Kunststoffplatte mit antibakteriellen Additiven versehen ist.

Im folgenden wird die Erfindung an einem in der Zeichnung dargestellten Ausführungsbeispiel näher erläutert; es zeigen:

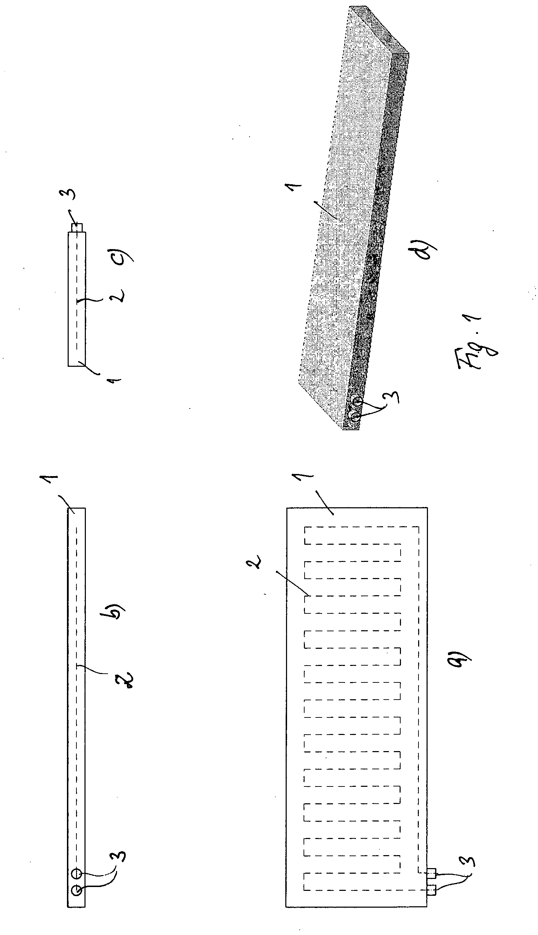

- Fig. 1: in den Teilfiguren a) bis d) eine Drauf-, Stirn- und Seitenansicht sowie eine perspektivische Ansicht der Schneideeinrichtung, teilweise als Schnittdarstellung,

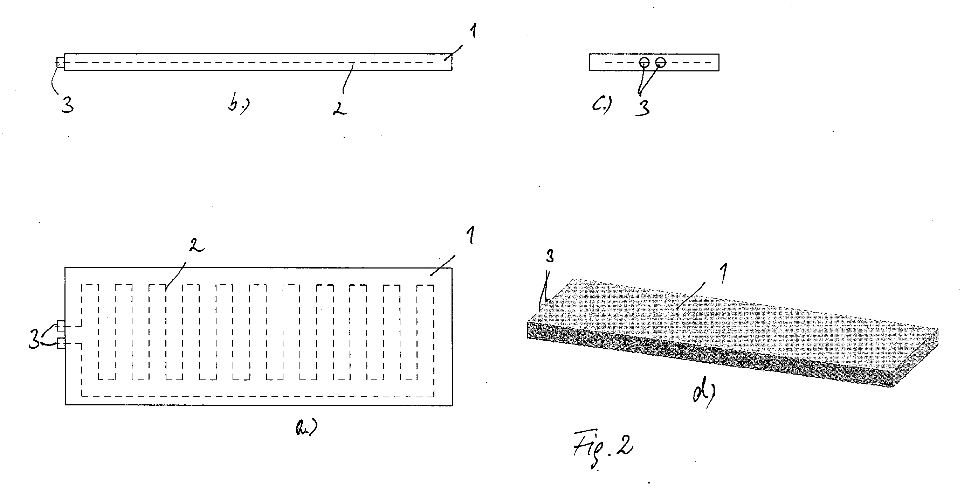

- Fig. 2: eine der Fig. 1 entsprechende Darstellung einer weiteren Ausführungsform.

Die in der Zeichnung schematisch dargestellte Schneideeinrichtung ist sowohl für häusliche als auch für gastronomische Zwecke geeignet und besteht aus einem Schneidebrett mit einer Kunststoffplatte 1, die mit einem oder mehreren, im Inneren liegenden Kanälen 2 versehen ist. Diese Kanäle 2 können mit einem fluiden oder gasförmigen Medium zur Kühlung oder Erwärmung gespeist werden. Dazu ist eine in der Zeichnung nicht dargestellte Kühl- oder Heizeinrichtung vorgesehen, die an die Kanäle 2 des Schneidebretts anschließbar ist und diese mit dem Medium speist.

Im einzelnen besteht die Kunststoffplatte 1 aus lebensmittelechtem Kunststoff, insbesondere aus Polypropylen oder Hart-Polyethylen, es können jedoch auch weitere, dem Anwendungszweck genügende Kunststoffwerkstoffe zum Einsatz kommen.

Soweit der gewünschte Temperaturbereich oberhalb des Gefrierpunkts von Wasser bleibt, kann für die Kühlung bis knapp oberhalb 0°C bzw. für die Erwärmung als Medium Wasser eingesetzt werden.

Selbstverständlich können jedoch auch andere Substanzen verwendet werden; so kann als Medium für die Kühlung auch eine lebensmittelechte organische Substanz wie Propylenglykol oder dergleichen vorgesehen sein.

Die Kanäle 2 sind in aus der Zeichnung nicht näher hervorgehender Weise endseitig mit Anschlußelementen 3 zur Verbindung mit der Kühl- oder Heizeinrichtung versehen.

Um die Schneideeinrichtung von der Kühl- oder Heizeinrichtung einfach trennen zu können, sind die Anschlußelemente 3 mit tropfdichten Schnellkupplungen versehen.

Zur Erleichterung der Handhabung, insbesondere bei der Reinigung, schließen die Anschlußelemente 3 bündig mit der Seitenfläche der Kunststoffplatte 1 ab.

Die Kühleinrichtung kann als kleines, nur der Versorgung der Kunststoffplatte 1 dienendes Kühlaggregat ausgebildet sein; denkbar ist jedoch auch, dass die Schneideeinrichtung an eine zentrale Kühleinheit angeschlossen ist.

Wie aus der Zeichnung zu ersehen ist, sind die Kanäle 2 etwa mittig in der Kunststoffplatte 1 angeordnet. Dabei verlaufen sie in einer mäanderförmigen, gleichmäßig beabstandenen Anordnung, wodurch eine über die Fläche gesehen gleichmäßige Temperierung erreicht werden kann.

Grundsätzlich kann, je nach zu verarbeitenden Produkten, die Kunststoffplatte 1 eine beliebeige Gestalt aufweisen; in der Regel wird sie jedoch - wie in der Zeichnung zu sehen - eine vorzugweise rechteckige Gestalt aufweisen.

In ebenfalls in der Zeichnung nicht näher dargestellter Weise kann die Kunststoffplatte 1 mit Verbindungselementen zur Anbringung an oder in Anbauteilen wie beispielsweise einem umschließenden Rahmen versehen sein, was den Einsatzbereich und die Verwendungsmöglichkeiten stark erweitert. Dazu können die Verbindungselemente von Magneten gebildet sein; es sind jedoch auch andere Anschlußmittel denkbar und geeignet.

Schließlich kann es gerade bei empfindlichen bzw. leicht verderblichen Produkten sinnvoll sein, wenn die Kunststoffplatte 1 mit antibakteriellen Additiven versehen ist.

## Patentansprüche

1. Schneideeinrichtung für häusliche und/oder gastronomische Zwecke, bestehend aus einem Schneidebrett mit einer Kunststoffplatte (1), die mit einem oder mehreren, im Inneren liegenden Kanälen (2) versehen ist, welche mit einem fluiden oder gasförmigen Medien zur Kühlung oder Erwärmung gespeist werden können, sowie aus einer Kühl- oder Heizeinrichtung, die an die Kanäle (2) des Schneidbretts anschließbar ist und diese mit dem Medium speist.

2. Schneideeinrichtung nach Anspruch 1, **dadurch gekennzeichnet, dass** die Kunststoffplatte (1) aus lebensmittelechtem Kunststoff besteht, insbesondere aus Polypropylen oder Hart-Polyethylen.

3. Schneideeinrichtung,nach einem der vorangegangenen Ansprüche, **dadurch gekennzeichnet, dass** als Medium für die Kühlung bis oberhalb 0°C bzw. für die Erwärmung Wasser vorgesehen ist.

4. Schneideeinrichtung nach einem der vorangegangenen Ansprüche, **dadurch gekennzeichnet, dass** als Medium für die Kühlung eine lebensmittelechte organische Substanz wie Propylenglykol oder dergleichen vorgesehen ist.

5. Schneideeinrichtung nach einem der vorangegangenen Ansprüche, **dadurch gekennzeichnet, dass** die Kanäle (2) endseitig mit Anschlußelementen (3) zur Verbindung mit der Kühl- oder Heizeinrichtung versehen sind.

6. Schneideeinrichtung nach einem der vorangegangenen Ansprüche, **dadurch gekennzeichnet, dass** die Anschlußelemente (3) mit tropfdichten Schnellkupplungen versehen sind.

7. Schneideeinrichtung nach einem der vorangegangenen Ansprüche, **dadurch gekennzeichnet, dass** die Anschlußelemente (3) bündig mit der Seitenfläche der Kunststoffplatte (1) abschließen.

8. Schneideeinrichtung nach einem der vorangegangenen Ansprüche, **dadurch gekennzeichnet, dass** als Kühleinrichtung ein kleines, nur der Versorgung der Kunststoffplatte (1) dienendes Kühlaggregat oder eine zentrale Kühleinheit vorgesehen ist.

9. Schneideeinrichtung nach einem der vorangegangenen Ansprüche, **dadurch gekennzeichnet, dass** die Kanäle (2) etwa mittig in der Kunststoffplatte (1) angeordnet sind.

10. Schneideeinrichtung nach einem der vorangegangenen Ansprüche, **dadurch gekennzeichnet, dass** die Kanäle (2) in einer mäanderförmigen, gleichmäßig beabstandenen Anordnung verlaufen.

11. Schneideeinrichtung nach einem der vorangegangenen Ansprüche, **dadurch gekennzeichnet, dass** die Kunststoffplatte (1) vorzugweise rechteckige Gestalt aufweist.

12. Schneideeinrichtung nach einem der vorangegangenen Ansprüche, **dadurch gekennzeichnet, dass** die Kunststoffplatte (1) mit Verbindungselementen zur Anbringung an oder in Anbauteilen wie beispielsweise einem umschließenden Rahmen versehen ist.

13. Schneideeinrichtung nach einem der vorangegangenen Ansprüche, **dadurch gekennzeichnet, dass** die Verbindungselemente von Magneten gebildet sind.

14. Schneideeinrichtung nach einem der vorangegangenen Ansprüche, **dadurch gekennzeichnet, dass** die Kunststoffplatte (1) mit antibakteriellen Additiven versehen ist.
